(19) Europäisches Patentamt
European Patent Office
Office européen des brevets

(11) EP 2 389 414 B1

(12) EUROPEAN PATENT SPECIFICATION

(45) Date of publication and mention of the grant of the patent:
**10.07.2013 Bulletin 2013/28**

(21) Application number: **10702996.9**

(22) Date of filing: **19.01.2010**

(51) Int Cl.:
*C08L 69/00* (2006.01) *C08L 55/02* (2006.01)

(86) International application number:
**PCT/EP2010/000263**

(87) International publication number:
**WO 2010/083974 (29.07.2010 Gazette 2010/30)**

(54) **POLYCARBONATE MOLDING COMPOSITIONS**

POLYCARBONATFORMZUSAMMENSETZUNGEN

COMPOSITIONS À MOULER EN POLYCARBONATE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009 EP 09000933**

(43) Date of publication of application:
**30.11.2011 Bulletin 2011/48**

(73) Proprietor: **Bayer Intellectual Property GmbH**
**40789 Monheim (DE)**

(72) Inventor: **SEIDEL, Andreas**
**41542 Dormagen (DE)**

(74) Representative: **BIP Patents**
**Bayer Intellectual Property GmbH**
**Creative Campus Monheim**
**Alfred-Nobel-Straße 10**
**40789 Monheim am Rhein (DE)**

(56) References cited:
**WO-A-99/11713 WO-A-2007/009622**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 389 414 B1

## Description

Field of the Invention

The invention relates to thermoplastic molding compositions and in particular to impact-modified, hydrolysis-resistant polycarbonate compositions.

Background of the Invention

Thermoplastic molding compositions containing polycarbonates and ABS (acrylonitrile/butadiene/styrene) have been known for a long time. Thus, US 3 130 177 A describes readily processable molding compositions of polycarbonates and graft polymers of monomer mixtures of acrylonitrile and an aromatic vinyl hydrocarbon on polybutadiene.

WO 91/18052 A1 discloses PC/ABS compositions having a high heat stability, which are characterized in that the graft polymers have a sodium ion and potassium ion content of less than 1,500 ppm, preferably less than 800 ppm, and comprise a certain amount of antioxidants. The lithium ion content of the composition or graft polymer is not disclosed.

WO 99/11713 A1 discloses flameproofed PC/ABS compositions having an improved resistance to moisture and at the same time a high level of mechanical properties, which are characterized in that the graft polymers have a content of alkali metals of less than 1 ppm. In particular, the sodium ion and potassium ion content of the graft polymer should be less than 1 ppm. The lithium ion content of the composition or graft polymer is not disclosed.

WO 00/39210 A1 discloses impact-modified flameproofed PC compositions comprising a reinforcing substance which have an improved resistance to moisture and at the same time a high level of mechanical properties, which are characterized in that the styrene resins have a content of alkali metals of less than 1 ppm. In particular, the sodium ion and potassium ion content of the styrene resin should be less than 1 ppm. The lithium ion content of the composition or styrene resin is not disclosed. An object of the invention is to provide PC/ABS molding compositions having an improved stability to hydrolysis for the production of complex moldings.

WO 2007/009622 A1 discloses impact-modified molding compositions with improved hydrolysis resistance containing polycarbonate and ABS, and having a low level of lithium impurities.

Summary of the Invention

An impact modified thermoplastic molding composition comprising aromatic polycarbonate and/or polyester carbonate and a rubber-modified graft polymer prepared by the bulk, solution or bulk-suspension polymerization process is disclosed. The composition that is characterized by its low content of lithium ions and further exhibits a specified amount of sodium and/ or potassium ions, features improved hydrolytic resistance.

Detailed Description of the Invention

It has been found that impact-modified polycarbonate compositions having a low content of lithium ions have a significantly better resistance to hydrolysis than comparable compositions having a relatively high content of lithium ions even if the total alkali content is relatively high. In the view of the cited state of the art it is surprising, in particular, that it is even advantageous in terms of the hydrolysis resistance of the composition if the sodium and/or potassium content of the compositions exceeds a certain specified minimum limit

The present invention therefore provides thermoplastic molding compositions comprising

A) 52 to 95 parts by wt., preferably 53 to 85 parts by wt., most preferably 55 to 75 parts by wt., based on the total of A) and B), of aromatic polycarbonate and/or aromatic polyester carbonate and

B) 5 to 48 parts by wt., preferably 15 to 47 parts by wt., most preferably 25 to 45 parts by wt., based on the total of A) and B), of a rubber-modified graft polymer prepared by the bulk, solution or bulk-suspension polymerization process, lithium in an amount of greater than zero to lesser than or equal to 4 ppm, preferably 0.2 to 3.6 ppm, particularly preferably 0.3 to 3.2 ppm and most preferably 0.4 to 2.5 ppm, and sodium and/or potassium in an individual amount of greater than 1.5 ppm, preferably greater than 2 ppm.

In a preferable embodiment of the invention both the sodium and the potassium contents individually do not exceed 100 ppm, more preferably do not exceed 50 ppm, in particular preferably do not exceed 20 ppm and most preferably do not exceed 10 ppm.

In a particular preferable embodiment of the invention the lithium content of the composition is 0.2 to 3.6 ppm, the individual sodium and/or potassium content of the composition exceeds 1.5 ppm, and both the sodium and potassium contents individually do not exceed 20 ppm. Most preferably the lithium content of the composition is 0.3 to 3.2 ppm,

the individual sodium and/or potassium content exceeds 2 ppm, and both the sodium and potassium contents individually do not exceed 10 ppm.

Component A

Aromatic polycarbonates and/or aromatic polyester carbonates according to component A which are suitable according to the invention are known from the literature or may be prepared by processes known from the literature (for the preparation of aromatic polycarbonates see, for example, Schnell, "Chemistry and Physics of Polycarbonates", Interscience Publishers, 1964 and DE-AS 1 495 626, DE-A 2 232 877, DE-A 2 703 376, DE-A 2 714 544, DE-A 3 000 610 and DE-A 3 832 396; for the preparation of aromatic polyester carbonates e.g. DE-A 3 077 934).

Aromatic polycarbonates are prepared e.g. by reaction of aromatic dihydroxy compounds, preferably diphenols, with carbonic acid halides, preferably phosgene, and/or with aromatic dicarboxylic acid dihalides, preferably benzenedicarboxylic acid dihalides, by the phase interface process, optionally using chain terminators, for example monophenols, and optionally using branching agents having functionalities of three of more , for example triphenols or tetraphenols. Preparation via a melt polymerization process by reaction of diphenols with, for example, diphenyl carbonate is likewise possible.

Diphenols for the preparation of the aromatic polycarbonates and/or aromatic polyester carbonates are preferably those of the formula (I)

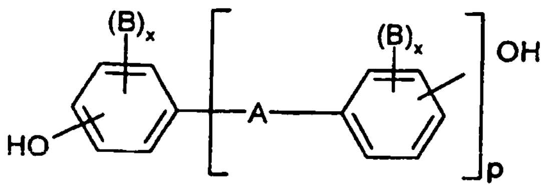

(I),

wherein

A is a single bond, $C_1$ to $C_5$-alkylene, $C_2$ to $C_5$-alkylidene, $C_5$ to $C_6$-cycloalkylidene, -O-, - SO-, -CO-, -S-, $-SO_2-$, $C_6$ to $C_{12}$-arylene, on to which further aromatic rings optionally containing heteroatoms may be fused, or a radical of the formula (II) or (III)

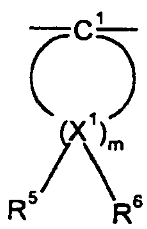

(II)

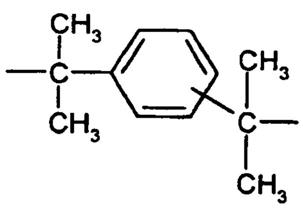

(III)

B in each case is $C_1$ to $C_{12}$-alkyl, preferably methyl, or halogen, preferably chlorine and/or bromine

x in each case independently of one another, is 0, 1 or 2,

p is 1 or 0, and

$R^5$ and $R^6$ independently for each $X^1$ and independently of one another denote hydrogen or $C_1$ to $C_5$-alkyl, preferably hydrogen, methyl or ethyl,

$X^1$ denotes carbon and

m denotes an integer from 4 to 7, preferably 4 or 5, with the proviso that on at least one atom X', $R^5$ and $R^6$ are simultaneously alkyl.

Preferred diphenols are hydroquinone, resorcinol, dihydroxydiphenols, bis-(hydroxyphenyl)-$C_1$-$C_5$-alkanes, bis-(hydroxyphenyl)-$C_5$-$C_6$-cycloalkanes, bis-(hydroxyphenyl) ethers, bis-(hydroxyphenyl) sulfoxides, bis-(hydroxyphenyl) ketones, bis-(hydroxyphenyl) sulfones and $\alpha,\alpha$-bis-(hydroxyphenyl)-diisopropyl-benzenes, and derivatives thereof which are brominated on the nucleus and/or chlorinated on the nucleus.

Particularly preferred diphenols are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, such as, for example, 2,2-bis-(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-Bis-(4-hydroxyphenyl)-propane (bisphenol A) is particularly preferred.

The diphenols may be employed individually or as any desired mixtures. The diphenols are known from the literature or obtainable by known processes.

Chain terminators which are suitable for the preparation of the thermoplastic aromatic polycarbonates are, for example, phenol, p-chlorophenol, p-tert-butylphenol or 2,4,6-tribromophenol, and also long-chain alkylphenols, such as 4-[2-(2,4,4-trimethylpentyl)]-phenol according to DE-A 2 842 005, or monoalkylphenols or dialkylphenols having a total of 8 to 20 carbon atoms in the alkyl substituents, such as 3,5-di-tert-butylphenol, p-iso-octylphenol, p-tert-octylphenol, p-dodecylphenol and 2-(3,5-dimethylheptyl)-phenol and 4-(3,5-dimethylheptyl)-phenol. The amount of chain terminators to be employed is in general between 0.5 mol% and 10 mol%, based on the total moles of the aromatic dihydroxy compounds employed.

The thermoplastic aromatic polycarbonates have weight-average molecular weights ($M_w$, measured e.g. by ultracentrifuge or scattered light measurement) of 10,000 to 200,000 g/mol, preferably 15,000 to 80,000 g/mol, particularly preferably 24,000 to 32,000 g/mol.

The thermoplastic aromatic polycarbonates may be branched in a known manner, and in particular preferably by incorporation of 0.05 to 2.0 mol% , based on the total of the aromatic dihydroxy compounds employed, of compounds having functionalities of three or more , for example those having three and more phenolic groups.

Both homopolycarbonates and copolycarbonates are suitable. For the preparation of copolycarbonates according to the invention according to component A, it is also possible to employ 1 to 25 wt.%, preferably 2.5 to 25 wt. %, based on the total amount of aromatic dihydroxy compounds to be employed, of polydiorgano-siloxanes having hydroxyaryloxy end groups. These are known (US 3 419 634) and may be prepared by processes known from the literature. The preparation of polydiorganosiloxane-containing copolycarbonates is described in DE-A 3 334 782.

Preferred polycarbonates, in addition to the bisphenol A homopolycarbonates, are the copolycarbonates of bisphenol A with up to 15 mol%, based on the total moles of aromatic dihydroxy compounds, of other aromatic dihydroxy compounds mentioned as preferred or particularly preferred, in particular 2,2-bis-(3,5-dibromo-4-hydroxyphenyl)-propane.

Aromatic dicarboxylic acid dihalides for the preparation of aromatic polyester carbonates are, preferably, the diacid dichlorides of isophthalic acid, terephthalic acid, diphenyl ether-4,4'-dicarboxylic acid and naphthalene-2,6-dicarboxylic acid.

Mixtures of the diacid dichlorides of isophthalic acid and terephthalic acid in a ratio of between 1:20 and 20:1 are particularly preferred.

A carbonic acid halide, preferably phosgene, is additionally co-used as a bifunctional acid derivative in the preparation of polyester carbonates.

Suitable chain terminators for the preparation of the aromatic polyester carbonates are, in addition to the monophenols already mentioned, also chlorocarbonic acid esters thereof and the acid chlorides of aromatic monocarboxylic acids, which may optionally be substituted by $C_1$ to $C_{22}$-alkyl groups or by halogen atoms, as well as aliphatic $C_2$ to $C_{22}$-monocarboxylic acid chlorides.

The amount of chain terminators is in each case 0.1 to 10 mol%, based on the moles of aromatic dihydroxy compounds in the case of the phenolic chain terminators and on the moles of dicarboxylic acid dichloride in the case of monocarboxylic acid chloride chain terminators.

The aromatic polyester carbonates may also contain incorporated aromatic hydroxycarboxylic acids.

The aromatic polyester carbonates may be either linear or branched in a known manner (in this context, see DE-A 2 940 024 and DE-A 3 007 934).

Branching agents which may be used are, for example, carboxylic acid chlorides having functionalities of three or more , such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, in amounts of 0.01 to

1.0 mol% (based on the dicarboxylic acid dichlorides employed), or phenols having functionalities of three or more , such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-[4,4-bis-(4-hydroxyphenyl)-cyclohexyl]-propane, 2,4-bis-(4-hydroxyphenyl-isopropyl)-phenol, tetra-(4-hydroxyphenyl)-methane, 2,6-bis-(2-hydroxy-5-methyl-benzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane, or 1,4-bis-[4,4'-dihydroxytriphenyl)-methyl]-benzene, in amounts of 0.01 to 1.0 mol%, based on the aromatic dihydroxy compounds employed. Phenolic branching agents may be initially introduced into the reaction mixture with the aromatic dihydroxy compounds, and acid chloride branching agents may be introduced together with the acid dichlorides.

The content of carbonate structural units in the thermoplastic aromatic polyester carbonates may be varied as desired. Preferably, the content of carbonate groups is a positive amount up to 100 mol%, in particular up to 80 mol%, particularly preferably up to 50 mol%, based on the total of ester groups and carbonate groups. Both the ester and the carbonate content of the aromatic polyester carbonates may be present in the polycondensate in the form of blocks or in random distribution.

The relative solution viscosity ($\eta_{rel}$) of the aromatic polycarbonates and polyester carbonates is in the range of 1.18 to 1.4, preferably 1.20 to 1.32 (measured on solutions of 0.5 g polycarbonate or polyester carbonate in 100 ml methylene chloride solution at 25 °C).

The thermoplastic aromatic polycarbonates and polyester carbonates may be employed by themselves or in any desired mixture.

<u>Component B</u>

The rubber-modified graft polymer B comprises a random copolymer of

B.1 50 to 97 wt.%, preferably 65 to 95 wt.%, particularly preferably 80 to 90 wt.%, based on B), of one or more vinyl monomers on

B.2 3 to 50 wt.%, preferably 5 to 35 wt.%, particularly preferably 10 to 20 wt.%, based on B), of one or more graft bases having a glass transition temperature of <10°C, preferably <-10°C, particularly preferably <-30 °C, in particular <-50 °C

the preparation of B) being carried out in a known manner by a bulk, or solution or bulk-suspension polymerization process, as described e.g. in US-3 243 481, US-3 509 237, US-3 660 535, US-4 221 833 and US-4 239 863 (incorporated herein by reference).

Monomers B.1 are preferably mixtures of

B.1.1 50 to 99 wt.%, preferably 65 to 85 wt.%, based on B.1, of at least one monomer selected from the group consisting of vinylaromatics and vinylaromatics substituted on the nucleus (such as, for example, styrene, α-methylstyrene, p-methylstyrene or p-chlorostyrene) and

B.1.2 1 to 50 wt.%, preferably 15 to 35 wt.%, based on B.1, of at least one monomer selected from the group consisting of vinyl cyanides (unsaturated nitriles, such as acrylonitrile and methacrylonitrile), (meth)acrylic acid ($C_1$-$C_8$)-alkyl esters (such as methyl methacrylate, n-butyl acrylate and tert-butyl acrylate) and derivatives of unsaturated carboxylic acids (such as anhydrides and imides, for example maleic anhydride and N-phenyl-maleimide).

Preferred monomer B.1.1 is selected from the group consisting of styrene and α-methylstyrene, and preferred monomer B.1.2 is selected from the group consisting of acrylonitrile, butyl acrylate, tert-butyl acrylate, maleic anhydride and methyl methacrylate.

Particularly preferred B.1.1 is styrene and the preferred B.1.2 is acrylonitrile. In an alternative embodiment, styrene is employed as monomer B.1.1) and a mixture of at least 70 wt.%, in particular greater than 80 wt.%, particularly preferably greater than 85 wt.%, based on B.1.2), of acrylonitrile and a maximum of 30 wt.%, in particular max. 20 wt.%, particularly preferably max. 15 wt.%, based on B.1.2), of a further monomer selected from the group consisting of butyl acrylate, tert-butyl acrylate, maleic anhydride and methyl methacrylate may be employed as monomer B.1.2).

Rubbers B.2 which are suitable for the rubber-modified graft polymers B are, for example, diene rubbers, styrene/butadiene (SBR) rubbers, EP(D)M rubbers, that is to say those based on ethylene/propylene and optionally diene, and acrylate, polyurethane, silicone, chloroprene and ethylene/vinyl acetate rubbers and mixtures of the abovementioned rubber types.

Preferred rubbers B.2 are diene rubbers (e.g. based on butadiene, isoprene etc.) or mixtures of diene rubbers

or copolymers of diene rubbers or mixtures thereof with further copolymerizable monomers (e.g. according to B.1.1 and B.1.2), with the proviso that the glass transition temperature of component B.2 is below 10°C, preferably below -10 °C.

Preferably, the graft base B.2 is a linear or branched diene rubber. Particularly preferably, the graft base B.2) is a linear or branched polybutadiene rubber, a polybutadiene/styrene rubber or a mixture thereof.

If necessary and if the rubber properties of component B.2 are not thereby impaired, component B may additionally also comprise small amounts, typically less than 5 wt.%, preferably less than 2 wt.%, based on B.2, of ethylenically unsaturated crosslinking monomers . Examples of such monomers include alkylene diol di-(meth)-acrylates, polyester di-(meth)-acrylates, divinylbenzene, trivinylbenzene, triallyl cyanurate, allyl (meth)-acrylate, diallyl maleate and diallyl fumarate.

The rubber-modified graft polymer B may be obtained by grafting polymerization of B.1 on to B.2, the grafting polymerization being carried out by a bulk or solution or bulk-suspension polymerization process.

In the preparation of the rubber-modified graft polymers B, it is essential that the rubber component B.2 is present in dissolved form in the mixture of monomers B.1.1 and/or B.1.2 before the grafting polymerization. A further organic solvent may optionally also be added for this purpose, such as, for example, methyl ethyl ketone, toluene or ethylbenzene or a mixture of conventional organic solvents. The rubber component B.2 may thus be neither so highly crosslinked that a solution in B.1.1 and/or B.1.2, optionally in the presence of further solvents, becomes impossible, nor may B.2 already be in the form of discrete particles at the start of the grafting polymerization. The particle morphology and increasing crosslinking of B.2, which are important for the product properties of B, develop only in the course of the grafting polymerization (in this context see, for example, Ullmann, Encyclopädie der technischen Chemie, volume 19, p. 284 et seq., 4th edition 1980 incorporated herein by reference). Further additives, such as polymerization initiators, stabilizers, regulators, crosslinking agents and additives which inhibit post-crosslinking, in particular also oils (for example silicone oils, synthetic machine oils or plant oils) may be added to the reaction mixture in the grafting polymerization reaction.

The copolymer of B.1.1 and B.1.2 is conventionally present in the polymer B in part in a form grafted on to or into the rubber B.2, this graft copolymer forming discrete particles in the polymer B. The content of the grafted-on or -in copolymer of B.1.1 and B.1.2 in the total copolymer of B.1.1 and B.1.2 - that is to say the grafting yield (= weight ratio of the graft monomers actually grafted to the total graft monomers used x 100, stated in %) - is preferably 2 to 40 % more preferably 3 to 30 %, particularly preferably 4 to 20 %.

The average particle diameter of the resulting grafted rubber particles (determined by counting on electron microscopy photographs) is in the range from 0.3 to 5 μm, preferably 0.4 to 2.5 μm, in particular 0.5 to 1.5 μm.

Preferably, the rubber-modified graft polymer B has a content of lithium of more than zero and less than or equal to 10 ppm, particularly preferably 0.5 ppm to 9 ppm, preferably 0.8 ppm to 8 ppm.

The composition may comprise further additives. For example, polymeric constituents and functional additives may be added to the composition.

In particular, (co)polymers of at least one monomer selected from the group consisting of vinylaromatics, vinyl cyanides (unsaturated nitriles), (meth)acrylic acid ($C_1$ to $C_8$)-alkyl esters, unsaturated carboxylic acids and derivatives (such as anhydrides and imides) of unsaturated carboxylic acids may be added as component C.

Copolymers C) which are suitable in particular are resinous, thermoplastic and rubber-free and are of

C.1 50 to 99 wt.%, preferably 65 to 90 wt.%, based on the (co)polymer C), of at least one monomer chosen from the group consisting of vinylaromatics (such as, for example, styrene and α-methylstyrene), vinylaromatics substituted on the nucleus (such as, for example p-methylstyrene or p-chlorostyrene) and (meth)acrylic acid ($C_1$-$C_8$)-alkyl esters (such as, for example, methyl methacrylate, n-butyl acrylate and tert-butyl acrylate) and

C.2 1 to 50 wt.%, preferably 10 to 35 wt.%, based on the (co)polymer C), of at least one monomer chosen from the group consisting of vinyl cyanides (such as, for example, unsaturated nitriles, such as acrylonitrile and methacrylonitrile), (meth)acrylic acid ($C_1$-$C_8$)-alkyl esters (such as, for example, methyl methacrylate, n-butyl acrylate and tert-butyl acrylate), unsaturated carboxylic acids and derivatives of unsaturated carboxylic acids (for example maleic anhydride and N-phenyl-maleimide).

The copolymer of C.1 styrene and C.2 acrylonitrile is particularly preferred.

Also suitable as component C) is a homopolymer of (meth)acrylic acid ($C_1$-$C_8$)-alkyl ester (such as methyl methacrylate, n-butyl acrylate and tert-butyl acrylate).

Such (co)polymers C) are known and may be prepared by free-radical polymerization, in particular by emulsion, suspension, solution or bulk polymerization. The (co)polymers C) preferably have molecular weights $M_w$ (weight-average, determined by light scattering or sedimentation) of between 15,000 and 200,000.

Rubber-modified copolymers prepared by the emulsion polymerization process (component D) may also be employed as further polymeric additives. These commercially available graft polymers, which are as a rule supplied as

impact modifiers, are preferably acrylonitrile/styrene/butadiene (ABS) and/or methyl methacrylate/styrene/butadiene (MBS). However, graft polymers D) which are likewise preferably suitable are those of

D.1 5 to 95 wt.%, based on component D), of a grafted shell of

D.1.1 50 to 99 wt.%, preferably 65 to 90 wt.%, based on the grafted shell D.1, of at least one monomer chosen from the group consisting of vinylaromatics (such as, for example, styrene and $\alpha$-methylstyrene), vinylaromatics substituted on the nucleus (such as, for example p-methylstyrene or p-chlorostyrene) and (meth)acrylic acid ($C_1$-$C_8$)-alkyl esters (such as, for example, methyl methacrylate, n-butyl acrylate and tert-butyl acrylate) and

D.1.2 1 to 50 wt.%, preferably 10 to 35 wt.%, based on the grafted shell, of at least one monomer chosen from the group consisting of vinyl cyanides (such as, for example, unsaturated nitriles, such as acrylonitrile and methacrylonitrile), (meth)acrylic acid ($C_1$-$C_8$)-alkyl esters (such as, for example, methyl methacrylate, n-butyl acrylate and tert-butyl acrylate), unsaturated carboxylic acids and derivatives of unsaturated carboxylic acids (for example maleic anhydride and N-phenyl-maleimide)

on

D.2 95 to 5 wt.-%, based on component C), of a graft base chosen from the group consisting of diene rubbers, silicone rubbers, acrylate rubbers and silicone/acrylate composite rubbers.

In a preferred embodiment the rubber-modified copolymers prepared by the emulsion polymerization process exhibit a core-shell structure.

The composition may moreover comprise further conventional polymer additives (component E), such as flameproofing agents, antidripping agents (for example fluorinated polyolefins, silicones and aramid fibres), lubricants and mold release agents, for example pentaerythritol tetrastearate, nucleating agents, antistatics, stabilizers, fillers and reinforcing substances (for example glass or carbon fibres, mica, kaolin, talc, $CaCO_3$ and glass flakes) as well as dyestuffs and pigments.

Preferably compositions do not contain flameproofing agents selected from the group of organic esters of phosphoric acid, particular preferably the composition is free of flameproofing agents.

<u>Preparation of the molding compositions and molded articles</u>

The thermoplastic molding compositions according to the invention are prepared by mixing the particular constituents in a known manner and subjecting the mixture to melt compounding and/or melt extrusion at temperatures of 200 °C to 300 °C in conventional units, such as internal kneaders, extruders and twin-screw extruders.

The mixing of the individual constituents may take place in a known manner, either successively or simultaneously, and in particular either at about 20°C (room temperature) or at a higher temperature.

The molding compositions according to the invention may be used for the production of all types of shaped articles. These may be produced by injection molding, extrusion and blow molding processes. A further form of processing is the production of shaped articles by thermoforming from previously produced sheets or films.

Examples of such shaped articles are films, profiles, all types of housing components, e.g. for domestic appliances, such as juice presses, coffee machines and mixers; for office machines, such as monitors, flatscreens, notebooks, printers and copiers; sheets, pipes, electrical installation conduits, windows, doors and further profiles for the building sector (interior finishing and exterior uses) as well as electrical and electronic components, such as switches, plugs and plug sockets and components for commercial vehicles, in particular for the automobile sector.

In particular, the molding compositions according to the invention may also be used, for example, for the production of the following shaped articles or moldings: interior finishing components for rail vehicles, ships, aircraft, buses and other motor vehicles, housings for electrical equipment containing small transformers, housings for equipment of processing and transmitting information, housings and coverings for medical equipment, massage equipment and housings therefor, toy vehicles for children, flat wall elements, housings for safety devices, thermally insulated transportation containers, moldings for sanitary and bath fittings, covering gratings for ventilation openings and housings for garden equipment.

<u>EXAMPLES</u>

Component A

Linear polycarbonate based on bisphenol A having a weight-average molecular weight $\overline{M}_w$ of 28 kg/mol (determined by GPC).

Components B-1 to B-10

ABS polymers prepared by bulk polymerization with an A:B:S ratio of 20:15:65. The various ABS polymers B-1 to B-10 differ only with respect to the amounts of impurities of lithium, sodium and potassium, which they contain.

Preparation and testing of the molding compositions according to the invention

Components A and B are mixed on a 1.31 internal kneader.

To evaluate the resistance to hydrolysis of the exemplified PC/ABS compositions , the melt volume flow rates (MVR) were determined in accordance with ISO1133 at 260°C with a 5 kg piston load on samples immediately after the compounding and after hydrolytic ageing at 95 °C and 100 % relative humidity for 7 days. The resulting change in the MVR is a measure of the resistance of the composition to hydrolysis, and is calculated as follows:

$$MVR\ change = \frac{MVR\ (after\ storage) - MVR\ (before\ storage)}{MVR\ (before\ storage)} * 100\,\%.$$

Compositions with decent hydrolysis resistance typically and preferably are characterized by MVR changes in this test below 50%, more preferably below 30%, and most preferably below 20%.

Alkali and alkali earth metal contents of the compositions have been determined by inductive coupled plasma atomic emission spectroscopy (ICP-AES).

Several compositions comprising component A and one ABS graft polymer selected from the group consisting of B.1 to B.10 have been prepared and tested.

The test results points to that for compositions with lithium ion contents of below 4 ppm, hydrolysis resistance is better even if sodium and potassium level are very high compared to compositions (V10) where lithium content is above 4 ppm and sodium and potassium level is very low.

The test results in particular points to that for compositions with lithium ion contents of below 4 ppm, hydrolysis resistance is further improved if sodium content and/or potassium content is increased individually beyond 1.5 ppm, and both sodium and potassium contents do not exceed 100 ppm (compare inventive examples 2 and 3 with comparison example V 1 and example 4, or compare inventive examples 5 and 7 with comparison example V1 and example 6). The test results also points to that compositions with decent hydrolytic stability are only obtained if the lithium ion content of the composition is below 4 ppm (compare inventive examples 2, 8 and 9 with comparison example V10). Also the data point to that the effect of increasing the lithium content of the composition beyond the limit of 4 ppm is much more critical for the hydrolytic stability of the composition than increasing the individual sodium and/or potassium content even beyond the herein mentioned 100 ppm limit (compare examples 4 and 6 with low lithium and very high sodium resp. potassium content with V10 with relatively high lithium but still very low total alkali metal content). This means that it is not the total alkali metal content which determines the hydrolytic stability of the composition as taught by the state of the art. Rather it was now unexpectedly found that it is a combination of specifically a low lithium content and a well-defined sodium and/or potassium content which provides the compositions with the best-in-class hydrolysis performance.

Although the invention has been described in detail in the foregoing for the purpose of illustration, it is to be understood that such detail is solely for that purpose and that variations may be made therein by those skilled in the art without departing from the spirit and scope of the invention except as it may be limited by the claims.

Table 1: Molding Compositions and their Properties

| | **V1** | **2** | **3** | **4** | **5** | **6** | **7** | **8** | **9** | **V10** |
|---|---|---|---|---|---|---|---|---|---|---|
| A | 65 | 65 | 65 | 65 | 65 | 65 | 65 | 65 | 65 | 65 |
| B-1 | 35 | | | | | | | | | |
| B-2 | | 35 | | | | | | | | |
| B-3 | | | 35 | | | | | | | |
| B-4 | | | | 35 | | | | | | |
| B-5 | | | | | 35 | | | | | |
| B-6 | | | | | | 35 | | | | |
| B-7 | | | | | | | 35 | | | |

(continued)

| | V1 | 2 | 3 | 4 | 5 | 6 | 7 | 8 | 9 | V10 |
|---|---|---|---|---|---|---|---|---|---|---|
| B-8 | | | | | | | | 35 | | |
| B-9 | | | | | | | | | 35 | |
| B-10 | | | | | | | | | | 35 |
| | | | | | | | | | | |
| MVR chanqe [%] | 12.8 | 8.7 | 10.8 | 22.0 | 12.2 | 24.2 | 11.6 | 13.6 | 15.5 | 131.7 |
| | | | | | | | | | | |
| Li content of composition [ppm] | 1.3 | 1.3 | 1.3 | 1.3 | 1.3 | 1.3 | 1.3 | 2.0 | 3.5 | 6.0 |
| Na content of composition [ppm] | 0.8 | 2.8 | 6.8 | 176 | 0.8 | 0.8 | 2.8 | 2.8 | 2.8 | 2.8 |
| K content of composition [ppm] | 0.8 | 0.8 | 0.8 | 0.8 | 2.8 | 176 | 2.8 | 0.8 | 0.8 | 0.8 |
| Li+Na+K [ppm] | 2.9 | 4.9 | 8.9 | 178 | 4.9 | 178 | 6.9 | 5.6 | 7.1 | 9.6 |

## Claims

**1.** A thermoplastic molding composition comprising

A) 52 to 95 parts by wt., based on the total of A) and B), of aromatic polycarbonate and/or aromatic polyester carbonate and
B) 5 to 48 parts by wt., based on the total of A) and B), of a rubber-modified graft polymer prepared by the bulk, solution or bulk-suspension polymerization process,

lithium in an amount of greater than zero to lesser than or equal to 4 ppm, and
sodium and/or potassium in an individual amount of greater than 1.5 ppm.

**2.** A thermoplastic molding composition according to claim 1, wherein
lithium is present in an amount of greater than zero to lesser than or equal to 4 ppm, and sodium and/or potassium are present in an individual amount of greater than 1.5 ppm with the proviso that both the sodium and the potassium contents individually do not exceed 100 ppm.

**3.** The composition according to Claim I or 2 having a sodium content and/or a potassium content of individually greater than 2.0 ppm.

**4.** The composition according to anyone of Claims 1 to 3 wherein content of lithium is 0.2 ppm to 3.6 ppm.

**5.** The composition according to anyone of Claims 1 to 4 whereby the composition is free of flameproofing agents selected from the group of organic esters of phosphoric acid.

**6.** The composition according to anyone of Claims 1 to 6 wherein the rubber-modified graft polymer comprises

B.1 65 to 95 wt.%, based on B), of the polymerized product of a mixture of

B.1.1 1 50 to 99 wt.%, based on B.1), of at least one member selected from the group consisting of vinylaromatics and vinylaromatics substituted on the nucleus and

B.1.2 1 to 50 wt.%, based on B.1), of at least one member selected from the group consisting of vinyl cyanides, (meth)acrylic acid ($C_1$-$C_8$)-alkyl esters and derivatives of unsaturated carboxylic acids

grafted on
B.2 5 to 35 wt.%, based on B), of one or more graft bases having a glass transition temperature of <-10 °C.

**7.** The composition according to Claim 6, wherein B.1.1) is styrene and B.1.2) is acrylonitrile.

**8.** The composition according to Claim 6, wherein B.1.1) is styrene and B.1.2) is a mixture of at least 70 wt.%, based on B.1.2), of acrylonitrile and not more than 30 wt.%, based on B.1.2) of at least one member selected from the group consisting of butyl acrylate, tert-butyl acrylate, maleic anhydride and methyl methacrylate.

**9.** The composition according to one of the Claims 6 to 8, wherein B.2) is at least one member selected from the group consisting of polybutadiene rubber, and polybutadiene/styrene rubber.

**10.** The composition according to Claim 1 or 2 further comprising a rubber-free (co)polymer of

C.1 50 to 99 wt.%, based on the (co)polymer, of at least one monomer selected from the group consisting of vinylaromatics, vinylaromatics substituted on the nucleus and (meth)acrylic acid ($C_1$-$C_8$)-alkyl esters and
C.2 1 to 50 wt.%, based on the copolymer, of at least one monomer selected from the group consisting of vinyl cyanides, (meth)acrylic acid ($C_1$-$C_8$)-alkyl esters, unsaturated carboxylic acids and derivatives of unsaturated carboxylic acids.

**11.** The composition according to Claim 1 or 2 further comprising a graft polymer D prepared by emulsion polymerization.

**12.** The composition according to Claim 11, wherein D) comprises

D.1 5 to 95 wt.%, based on D), of a copolymerized grafted shell of

D.1.1 50 to 99 wt.%, based on the grafted shell D.1, of at least one member selected from the group consisting of vinylaromatics, vinylaromatics substituted on the nucleus and (meth)acrylic acid ($C_1$-$C_8$)alkyl esters and
D.1.2 1 to 50 wt.%, based on the grafted shell, of at least one member selected from the group consisting of vinyl cyanides, (meth)acrylic acid ($C_1$-$C_8$)-alkyl esters, unsaturated carboxylic acids and derivatives of unsaturated carboxylic acids

grafted on
D.2 5 to 95 wt.-% based on D), of a graft base selected from the group consisting of diene rubbers, silicone rubbers, acrylate rubbers and silicone/acrylate composite rubbers.

**13.** The composition according to Claim 1, wherein the lithium content of the molding composition is 0.3 to 3.2 ppm, the sodium and/or potassium content of the molding compositions individually exceeds 2 ppm, and both the sodium and the potassium contents individually do not exceed 10 ppm.

**14.** The compositions of one of the Claims 1 to 13 exhibiting an MVR-change, determined in accordance with ISO1133 at 260°C with a 5 kg piston load on samples immediately after the compounding and after hydrolytic ageing at 95°C and 100 % relative humidity for 7 days, of not more than 50%.

**15.** A molded article comprising the compositions of one of the Claims 1 to 14.

**Patentansprüche**

**1.** Thermoplastische Formmasse, enthaltend

A) 52 bis 95 Gew.-Teile, bezogen auf die Summe von A) und B), aromatisches Polycarbonat und/oder aromatisches Polyestercarbonat und
B) 5 bis 48 Gew.-Teile, bezogen auf die Summe von A) und B), eines kautschukmodifizierten Pfropfpolymerisats,

hergestellt im Masse-, Lösungs- oder Masse-Suspension-Polymerisationsverfahren, Lithium in einer Menge von mehr als 0 bis kleiner gleich 4 ppm und
Natrium und/oder Kalium in einer jeweiligen Menge von mehr als 1,5 ppm.

**2.** Thermoplastische Formmasse nach Anspruch 1, wobei Lithium in einer Menge von mehr als 0 bis kleiner gleich 4 ppm vorliegt und
Natrium und/oder Kalium in einer individuellen Menge von mehr als 1,5 ppm vorliegen,
mit der Maßgabe, dass sowohl der Natriumgehalt als auch der Kaliumgehalt jeweils nicht über 100 ppm hinausgehen.

**3.** Masse nach Anspruch 1 oder 2 mit einem Natriumgehalt und/oder einem Kaliumgehalt von jeweils mehr als 2,0 ppm.

**4.** Masse nach einem der Ansprüche 1 bis 3, wobei der Lithiumgehalt 0,2 ppm bis 3,6 ppm beträgt.

**5.** Masse nach einem der Ansprüche 1 bis 4, wobei die Masse frei von Flammschutzmitteln aus der Gruppe der organischen Ester von Phosphorsäure ist.

**6.** Masse nach einem der Ansprüche 1 bis 5, bei dem das kautschukmodifizierte Propfpolymerisat

B.1 65 bis 95 Gew.-%, bezogen auf B), des polymerisierten Produkts einer Mischung von

B.1.1 50 bis 99 Gew.-%, bezogen auf B.1), mindestens eines Mitglieds aus der Gruppe bestehend aus Vinylaromaten und kernsubstituierten Vinylaromaten und
B.1.2 1 bis 50 Gew.-%, bezogen auf B.1), mindestens eines Mitglieds aus der Gruppe bestehend aus Vinylcyaniden, (Meth)Acrylsäure-($C_1$-$C_8$)-alkylestern und Derivaten ungesättigter Carbonsäuren

auf
B.2 5 bis 35 Gew.-%, bezogen auf B), einer oder mehrerer Pfropfgrundlagen mit einer Glasübergangstemperatur <-10°C

umfasst.

**7.** Masse nach Anspruch 6, wobei es sich bei B.1.1) um Styrol und bei B.1.2) um Acrylnitril handelt.

**8.** Masse nach Anspruch 6, wobei es sich bei B.1.1) um Styrol und bei B.1.2) um eine Mischung von mindestens 70 Gew.-%, bezogen auf B.1.2), Acrylnitril und höchstens 30 Gew.-%, bezogen auf B.1.2), mindestens eines Mitglieds aus der Gruppe bestehend aus Butylacrylat, tert.-Butylacrylat, Maleinsäureanhydrid und Methylmethacrylat handelt.

**9.** Masse nach einem der Ansprüche 6 bis 8, wobei es sich bei B.2) um mindestens ein Mitglied aus der Gruppe bestehend aus Polybutadienkautschuk und Polybutadien/Styrol-Kautschuk handelt.

**10.** Masse nach Anspruch 1 oder 2, ferner enthaltend ein kautschukfreies (Co)Polymerisat aus

C.1 50 bis 99 Gew.-%, bezogen auf das (Co)Polymerisat, mindestens eines Monomers aus der Gruppe bestehend aus Vinylaromaten, kernsubstituierten Vinylaromaten und (Meth)Acrylsäure-($C_1$-$C_8$)-alkylestern und
C.2 1 bis 50 Gew.-%, bezogen auf das Copolymerisat, mindestens eines Monomers aus der Gruppe bestehend aus Vinylcyaniden, (Meth)Acrylsäure-($C_1$-$C_8$)-alkylestern, ungesättigten Carbonsäuren und Derivaten ungesättigter Carbonsäuren.

**11.** Masse nach Anspruch 1 oder 2, ferner enthaltend ein durch Emulsionspolymerisation hergestelltes Pfropfpolymerisat D.

**12.** Masse nach Anspruch 11, wobei D)

D.1 5 bis 95 Gew.-%, bezogen auf D), einer copolymerisierten gepfropften Schale aus

D.1.1 5 bis 99 Gew.-%, bezogen auf die gepfropfte Schale D.1, mindestens eines Mitglieds aus der Gruppe bestehend aus Vinylaromaten, kernsubstituierten Vinylaromaten und (Meth)Acrylsäure-($C_1$-$C_8$)-alkylestern und

D.1.2 1 bis 50 Gew.-%, bezogen auf die gepfropfte Schale, mindestens eines Mitglieds aus der Gruppe bestehend aus Vinylcyaniden, (Meth)Acrylsäure-($C_1$-$C_8$)-alkylestern, ungesättigten Carbonsäuren und Derivaten ungesättigter Carbonsäuren

auf
D.2 5 bis 95 Gew.-%, bezogen auf D), einer Pfropfgrundlage aus der Gruppe bestehend aus Dienkautschuken, Silikonkautschuken, Acrylatkautschuken und Silikon/Acrylat-Kompositkautschuken

umfasst.

**13.** Masse nach Anspruch 1, wobei der Lithiumgehalt der Formmasse 0,3 bis 3,2 ppm beträgt, der Natrium- und/oder Kaliumgehalt der Formmasse jeweils 2 ppm übersteigt und sowohl der Natriumgehalt als auch der Kaliumgehalt jeweils 10 ppm nicht übersteigen.

**14.** Masse nach einem der Ansprüche 1 bis 13 mit einer nach ISO 113 bei 260°C und einer Stempellast von 5 kg oben sofort nach der Compoundierung und nach hydrolytischer Alterung bei 95°C und 100% relativer Feuchte über einen Zeitraum von 7 Tagen gemessenen MVR-Änderung von höchstens 50%.

**15.** Formkörper, enthaltend die Massen nach einem der Ansprüche 1 bis 14.

**Revendications**

**1.** Composition à mouler thermoplastique comprenant

A) 52 à 95 parties en poids, par rapport au total de A) et B), de polycarbonate aromatique et/ou de polyester carbonate aromatique et
B) 5 à 48 parties en poids, par rapport au total de A) et B), d'un polymère de greffage modifié par un caoutchouc préparé par le procédé de polymérisation en masse, en solution ou en masse-suspension,
du lithium en quantité allant de plus de zéro à une valeur inférieure ou égale à 4 ppm, et
du sodium et/ou du potassium, chacun en quantité supérieure à 1,5 ppm.

**2.** Composition à mouler thermoplastique selon la revendication 1, dans laquelle le lithium est présent en quantité allant de plus de zéro à une valeur inférieure ou égale à 4 ppm, et le sodium et/ou le potassium sont présents chacun en quantité supérieure à 1,5 ppm, sous réserve que les teneurs en sodium et en potassium ne dépassent pas chacune 100 ppm.

**3.** Composition selon la revendication 1 ou 2 présentant une teneur en sodium et/ou une teneur en potassium chacune supérieure à 2,0 ppm.

**4.** Composition selon l'une quelconque des revendications 1 à 3 dans laquelle la teneur en lithium est de 0,2 ppm à 3,6 ppm.

**5.** Composition selon l'une quelconque des revendications 1 à 4, laquelle composition est dépourvue d'agents ignifugeants choisis dans le groupe des esters organiques d'acide phosphorique.

**6.** Composition selon l'une quelconque des revendications 1 à 6 dans laquelle le polymère de greffage modifié par un caoutchouc comprend

B.1 65 à 95% en poids, par rapport à B), du produit polymérisé d'un mélange de
B.1.1 50 à 99% en poids, par rapport à B.1), d'au moins un membre choisi dans le groupe constitué par les vinylaromatiques et les vinylaromatiques substitués sur le noyau et
B.1.2 1 à 50% en poids, par rapport à B.1), d'au moins un membre choisi dans le groupe constitué par les cyanures de vinyle, les esters d'alkyle (en $C_1$-$C_8$) d'acide (méth)acrylique et les dérivés d'acides carboxyliques insaturés
greffé sur
B.2 5 à 35% en poids, par rapport à B), d'une ou plusieurs bases de greffage ayant une température de transition vitreuse de < -10°C.

**7.** Composition selon la revendication 6, dans laquelle B.1.1) est le styrène et B.1.2) est l'acrylonitrile.

**8.** Composition selon la revendication 6, dans laquelle B.1.1) est le styrène et B.1.2) est un mélange d'au moins 70% en poids, par rapport à B.1.2), d'acrylonitrile et de pas plus de 30% en poids, par rapport à B.1.2), d'au moins un membre choisi dans le groupe constitué par l'acrylate de butyle, l'acrylate de t-butyle, l'anhydride maléique et le méthacrylate de méthyle.

**9.** Composition selon l'une des revendications 6 à 8, dans laquelle B.2) est au moins un membre choisi dans le groupe constitué par un caoutchouc polybutadiène et un caoutchouc polybutadiène/styrène.

**10.** Composition selon la revendication 1 ou 2 comprenant en outre un (co)polymère sans caoutchouc de

C.1 50 à 99% en poids, par rapport au (co)polymère, d'au moins un monomère choisi dans le groupe constitué par les vinylaromatiques, les vinylaromatiques substitués sur le noyau et les esters d'alkyle (en $C_1$-$C_8$) d'acide (méth)acrylique et
C.2 1 à 50% en poids, par rapport au copolymère, d'au moins un monomère choisi dans le groupe constitué par les cyanures de vinyle, les esters d'alkyle (en $C_1$-$C_8$) d'acide (méth)acrylique, les acides carboxyliques insaturés et les dérivés d'acides carboxyliques insaturés.

**11.** Composition selon la revendication 1 ou 2 comprenant en outre un polymère de greffage D préparé par polymérisation en émulsion.

**12.** Composition selon la revendication 11, dans laquelle D) comprend

D.1 5 à 95% en poids, par rapport à D), d'une coque greffée copolymérisée de
D.1.1 50 à 99% en poids, par rapport à la coque greffée D.1, d'au moins un membre choisi dans le groupe constitué par les vinylaromatiques, les vinylaromatiques substitués sur le noyau et les esters d'alkyle (en $C_1$-$C_8$) d'acide (méth)acrylique et
D.1.2 1 à 50% en poids, par rapport à la coque greffée, d'au moins un membre choisi dans le groupe constitué par les cyanures de vinyle, les esters d'alkyle (en $C_1$-$C_8$)d'acide (méth)acrylique, les acides carboxyliques insaturés et les dérivés d'acides carboxyliques insaturés
greffée sur
D.2 5 à 95% en poids par rapport à D), d'une base de greffage choisie dans le groupe constitué par les caoutchoucs diéniques, les caoutchoucs de silicone, les caoutchoucs d'acrylate et les caoutchoucs composites silicone/acrylate.

**13.** Composition selon la revendication 1, dans laquelle la teneur en lithium de la composition à mouler est de 0,3 à 3,2 ppm, les teneurs en sodium et/ou en potassium des compositions à mouler dépassent chacune 2 ppm, et ni la teneur en sodium et ni la teneur en potassium ne dépasse individuellement 10 ppm.

**14.** Compositions selon l'une des revendications 1 à 13 présentant une variation de MVR, déterminée selon ISO 1133 à 260°C avec une charge sur le piston de 5 kg sur les échantillons, juste après la formulation et après vieillissement hydrolytique à 95°C et à 100% d'humidité relative pendant 7 jours, de pas plus de 50%.

**15.** Article moulé comprenant les compositions selon l'une des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3130177 A
- WO 9118052 A1
- WO 9911713 A1
- WO 0039210 A1
- WO 2007009622 A1
- DE AS1495626
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- US 3243481 A
- US 3509237 A
- US 3660535 A
- US 4221833 A
- US 4239863 A

### Non-patent literature cited in the description

- **SCHNELL.** Chemistry and Physics of Polycarbonates. Interscience Publishers, 1964
- **ULLMANN.** Encyclopädie der technischen Chemie. 1980, vol. 19, 284